# EUROPEAN PATENT APPLICATION

(11) **EP 3 297 223 A1**
(43) Date of publication of application: **21.03.2018**
(21) Application number: 16810794.4
(22) Date of filing: 06.04.2016
(51) Int. Cl.: H04L 12/66

(54) **FAX CONTROL METHOD AND GATEWAY DEVICE**

(30) Priority: 17.06.2015 CN 201510336865
(71) Applicant: ZTE Corporation, Shenzhen, Guangdong 518057 (CN)
(72) Inventor: WANG, Yi, Shenzhen Guangdong 518057 (CN); ZHANG, Penggang, Shenzhen Guangdong 518057 (CN); ZHANG, Jin, Shenzhen Guangdong 518057 (CN)
(74) Representative: HGF Limited
(86) International application number: PCT/CN2016/078587
(87) International publication number: WO 2016/202053

(57) **Abstract**

Disclosed is a fax control method, including: presetting a preprocessing configuration policy for preprocessing a fax signal in a gateway device, herein the preprocessing configuration policy contains a configuration policy of a fax control parameter that affects a success rate; and the gateway device acquiring a fax parameter negotiation signal in a fax process, reconfiguring the fax parameter negotiation signal according to the preset preprocessing configuration policy, and then sending the reconfigured fax parameter negotiation signal to a corresponding fax machine. As compared with traditional VBD fax, the solution changes the situation that a traditional gateway device can only transparently transmit a fax signal and cannot participate in afax process; and the gateway device can modify the fax control parameter according to the preprocessing configuration policy and can flexibly configure a fax negotiation parameter, thereby the compatibility of the gateway device with the fax machine is improved, while the fax success rate is improved, the fax control parameter can be modified directly via a gateway when the problem of fax failure occurs, the operation is not limited to modification of adjustment parameters of the fax machine only, and the user experience can be improved to a greater extent.

## Description

### Technical Field

The present application relates to but is not limited to the field of fax services, in particular to a fax control method and a gateway device.

### Background

In a next-generation network, fax service is one of voice services based on VoIP (Voice over Internet Protocol) technology, and is transmitted through data flow implemented by a gateway device. At present, mainly there are two modes of realizing a fax service through a gateway in the industry, i.e., VBD (Voice Band Data) and T.38 mode.

The T.38 mode refers to demodulating fax data sent by a fax machine through T.38 protocol and converting the fax data into a message format specified in the protocol for transmission. This mode has the following advantages: since the protocol itself enhances the adaptability of the message to the IP network, the anti-network abnormality capability during transmission is stronger and the fax success rate can be improved. The disadvantages are as follows: the implementation is more complex, and not all gateway devices in the existing network support the function, and thus the compatibility is poor.

The VBD mode, i.e., the transparent transmission mode, refers to transmitting T.30 fax data as common voices through G.711 voice coding and decoding. This mode has the following advantages: the implementation is simple, the specific content of fax data is not concerned, voice coding and decoding processing is performed only and the compatibility is good. Therefore, at present, the VBD mode is mainly used to realize fax. However, the VBD mode has the following disadvantages: it is affected by the IP network greatly, there would be a loss in the fax data when the network situation is not stable, causing a fax failure. In the VBD mode, the VoIP gateway device does not perform any processing on the T.30 fax signal, i.e., the gateway device can only transparently transmit the fax signal and cannot participate in the fax control process. Therefore, when the fax success rate is low, the success rate can only be improved by adjusting the parameters of the fax machine itself. There is no other method for improving the success rate unless the fax machine is replaced if the adjustment space of the parameters of the fax machine used by the user is small or the parameters cannot be adjusted, and the satisfaction of the user experience is poor.

### Summary

The following is a summary of the subject described in detail in this document. This summary is not used for limiting the protection scope of the claims.

Embodiments of the present invention provide a fax control method and a gateway device, which can solve the problem that a fax success rate can only be improved by adjusting adjustment parameters of a fax machine in VBD fax.

An embodiment of the present invention provides a fax control method, including:
a gateway device acquiring a fax parameter negotiation signal;
the gateway device configuring the fax parameter negotiation signal according to a preset preprocessing configuration policy, herein the preprocessing configuration policy contains a configuration policy of a fax control parameter and the fax control parameter affects a fax success rate; and
the gateway device sending the configured fax parameter negotiation signal to a corresponding fax machine.

In an embodiment of the present invention, the fax is voice band data fax; and the gateway device acquires the fax parameter negotiation signal after entering a voice band data fax process.

In an embodiment of the present invention, the gateway device acquiring the fax parameter negotiation signal includes:
when the gateway device is a receiver gateway device, acquiring the fax parameter negotiation signal from a local-end fax machine; and
when the gateway device is a sender gateway device, acquiring the fax parameter negotiation signal from an opposite-end fax machine.

In an embodiment of the present invention,
the gateway device acquiring the fax parameter negotiation signal from a local-end fax machine includes:
acquiring a local-end fax signal from the local-end fax machine;
performing voice decoding on the local-end fax signal; and
judging whether the local-end fax signal is a fax parameter negotiation signal; and
the gateway device acquiring the fax parameter negotiation signal from an opposite-end fax machine includes:
   receiving an opposite-end fax signal sent by the opposite-end fax machine;
   performing voice decoding on the opposite-end fax signal; and
   judging whether the opposite-end fax signal is a fax parameter negotiation signal.

In an embodiment of the present invention, the gateway device sending the configured fax parameter negotiation signal to a corresponding fax machine includes:
when the gateway device is a receiver gateway device, performing voice coding on the configured fax parameter negotiation signal and then sending the configured fax parameter negotiation signal to the opposite-end fax machine; and
when the gateway device is a sender gateway device, performing voice coding on the configured fax parameter negotiation signal and then sending the configured fax parameter negotiation signal to the local-end fax machine.

In an embodiment of the present invention, before the gateway device acquires the fax parameter negotiation signal, the method further includes: judging whether a fax signal preprocessing function is enabled; and/or judging whether the fax parameter negotiation signal has already been acquired and configured according to the preprocessing configuration policy in a current fax process.

In an embodiment of the present invention, the fax control parameter includes at least one of a fax speed parameter, an error control mode parameter and an ability parameter.

In an embodiment of the present invention, the configuration policy is: disabling a parameter which facilitates improvement of fax success rate after the parameter is disabled; and enabling a parameter which facilitates improvement of fax success rate after the parameter is enabled.

The embodiment of the presentinvention further provides a gateway device, including:
an acquisition module configured to acquire a fax parameter negotiation signal;
a configuration processing module configured to configure the fax parameter negotiation signal according to a preset preprocessing configuration policy, herein the preprocessing configuration policy contains a configuration policy of a fax control parameter and the fax control parameter affects a fax success rate; and
a sending module configured to send the configured fax parameter negotiation signal to a corresponding fax machine.

In an embodiment of the present invention, the fax is voice band data fax; and the acquisition module acquires the fax parameter negotiation signal through the following mode: acquiring the fax parameter negotiation signal after entering a voice band data fax process.

In an embodiment of the present invention, the gateway device further includes a judgment module configured to, before the acquisition module acquires the fax parameter negotiation signal, judge whether a fax signal preprocessing function is enabled; and/or judge whether the fax parameter negotiation signal has already been acquired and configured according to the preprocessing configuration policy in a current fax process.

In an embodiment of the present invention, the fax control parameter includes at least one of a fax speed parameter, an error control mode parameter and an ability parameter.

In an embodiment of the present invention, the configuration policy is: disabling a parameter which facilitates improvement of fax success rate after the parameter is disabled; and enabling a parameter which facilitates improvement of fax success rate after the parameter is enabled.

An embodiment of the present invention further provides a computer-readable storage medium, storing computer-executable instructions, which, when executed, implement the fax control method.

By using the fax control method and the gateway device provided by the embodiments of the present invention, a preprocessing configuration policy for preprocessing a fax signal is preset in a gateway device, the preprocessing configuration policy contains a configuration policy of a fax control parameter that affects a success rate; and the gateway device acquires a fax parameter negotiation signal in a fax process, reconfigures the fax parameter negotiation signal according to the preset preprocessing configuration policy, and then sends the reconfigured fax parameter negotiation signal to a corresponding fax machine. As compared with traditional VBD fax, the processing mode provided by the embodiment of the present invention changes the situation that a traditional gateway device can only transparently transmit a fax signal and cannot participate in a fax process; and the gateway device in the embodiment of the present invention can modify the fax control parameter according to the preprocessing configuration policy and can flexibly configure a fax negotiation parameter, thereby the compatibility of the gateway device with the fax machine can be improved while the fax success rate can be improved, the fax control parameter can be modified directly via a gateway when the problem of fax failure occurs while the gateway device is commercially used or is subjected to a network access permission test, the operation is not limited to modification of adjustment parameters of the fax machine only, and the user experience can be improved to a greater extent.

After the drawings and detailed description are read and understood, other aspects can be understood.

### Brief Description of Drawings

FIG. 1 illustrates a flowchart of a fax control method provided by embodiment 1 of the present invention.
FIG. 2 illustrates a structural schematic diagram of a gateway device provided by embodiment 2 of the present invention.
FIG. 3 illustrates a structural schematic diagram of a fax network system provided by embodiment 3 of the present invention.
FIG. 4 illustrates a flowchart of a fax control method when a gateway device is used as a receiver provided by embodiment 3 of the present invention.
FIG. 5 illustrates a flowchart of a fax control method when a gateway device is used as a sender provided by embodiment 3 of the present invention.

### Detailed Description

According to an embodiment of the present invention, a preprocessing configuration policy for preprocessing a fax signal is preset in a gateway device. The gateway device acquires a fax parameter negotiation signal in a fax process, reconfigures the fax parameter negotiation signal according to the preset preprocessing configuration policy, and then sends the reconfigured fax parameter negotiation signal to a corresponding fax machine. In other words, the gateway device in the embodiment of the present invention can modify a fax control parameter according to the preprocessing configuration policy and can flexibly configure a fax negotiation parameter. As compared with traditional VBD fax, the situation that a traditional gateway device can only transparently transmit a fax signal and cannot participate in a fax process is changed. Thereby the compatibility of the gateway device with the fax machine is improved, meanwhile the fax success rate is improved, a fax control parameter can be modified directly via a gateway when the fax fails, and the user experience can be improved to a greater extent.

The embodiments of the present invention will be further described below in detail through specific implementation modes with reference to the drawings.

### Embodiment 1

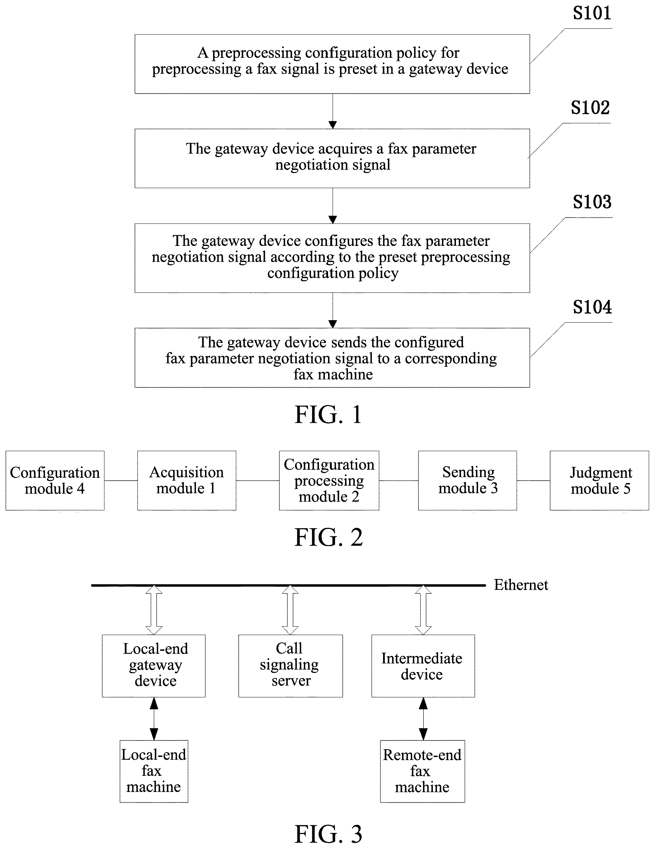

Referring to FIG. 1, a fax control method provided by this embodiment includes the following steps S101-S104.

In step S101, a preprocessing configuration policy for preprocessing a fax signal is preset in a gateway device.

In this step, the preset preprocessing configuration policy contains a configuration policy for fax control parameters that affect a success rate; and the fax control parameters include but are not limited to at least one of a fax speed parameter, an error control mode parameter and an ability parameter. Herein the ability parameter includes but is not limited to V.6 coding ability parameter, V.8 ability parameter, etc.

In this embodiment, the configuration policy may be set as: disabling a parameter (such as setting it to 0) which facilitates improvement of fax success rate if the parameter is disabled; and enabling a parameter (such as setting it to 1) which facilitates improvement of fax success rate if the parameter is enabled.

In step S102, the gateway device acquires a fax parameter negotiation signal.

In step S103, the gateway device configures the fax parameter negotiation signal according to the preset preprocessing configuration policy.

In step S104, the gateway device sends the configured fax parameter negotiation signal to a corresponding fax machine.

The gateway device in this embodiment can modify the fax control parameter according to the preprocessing configuration policy and can flexibly configure the fax negotiation parameter. As compared with traditional VBD fax, the situation that a traditional gateway device can only transparently transmit a fax signal and cannot participate in a fax process is changed. Thereby the compatibility of the gateway device with the fax machine is improved, meanwhile the fax success rate is improved, the fax control parameter can be modified directly via a gateway when the fax fails, and the user experience can be improved to a greater extent.

In this embodiment, the solution of this embodiment of the present invention will be exemplarily described below by taking a VBD fax mode as an example. However, it shall be understood that this embodiment of the present invention is not limited to the VBD fax mode only. For other fax modes, the solution of preprocessing the fax signal to improve the fax success rate provided by this embodiment of the present invention may also be used in a negotiation process.

When the VBD fax solution is used, in step S102, the gateway device acquires the fax parameter negotiation signal when entering a VBD fax process. The step of the gateway device acquiring the fax parameter negotiation signal includes the following operations.

When the gateway device is a receiver gateway device, i.e., a connected fax machine thereof is a receiving end, the fax parameter negotiation signal is acquired from a local-end fax machine, an acquisition process includes:
a local-end fax signal is acquired from the local-end fax machine, herein the fax signal is generally a local-end fax signal on which sampling, quantization and voice coding have been performed;
voice decoding is performed on the local-end fax signal; and
it is judged whether the decoded local-end fax signal is a fax parameter negotiation signal; if the decoded local-end fax signal is a fax parameter negotiation signal, the process turns to step S103; and otherwise, no configuration is performed and then the fax signal is sent to the opposite-fax machine directly.

When the gateway device is a sender gateway device, the fax parameter negotiation signal is acquired from an opposite-end fax machine, an acquisition process includes:
an opposite-end fax signal sent by the opposite-end fax machine is received, herein the fax signal has also been subjected to voice coding to facilitate transmission;
voice decoding is performed on the opposite-end fax signal; and
it is judged whether the opposite-end fax signal is a fax parameter negotiation signal; if the opposite-end fax signal is a fax parameter negotiation signal, the process turns to step S103; and otherwise, no configuration is performed and then the fax signal is sent to the local-end fax machine directly.

In step S104, the gateway device sending the configured fax parameter negotiation signal to the corresponding fax machine includes:
when the gateway device is the receiver gateway device, performing voice coding is performed on the configured fax parameter negotiation signal and then sending the configured fax parameter negotiation signal is sent to the opposite-end fax machine; and
when the gateway device is the sender gateway device, performing voice coding is performed on the configured fax parameter negotiation signal and then sending the configured fax parameter negotiation signal is sent to the local-end fax machine.

It shall be understood that voice coding and decoding in the above-mentioned process may be realized through a coding and decoding module on the gateway device and may also be realized through a coding and decoding module provided on an upper layer or lower layer device.

In step S101, when the preprocessing configuration policy for preprocessing the fax signal is preset in the gateway device, a user may perform corresponding configuration in a database table through a corresponding human-machine interface. Dduring configuration, whether the fax signal preprocessing function is enabled may also be selectively configured, and the process illustrated in FIG. 1 is executed only when the fax signal preprocessing function is enabled; otherwise, the process is not executed; and of course, the configuration for this enabled item may also be not performed and it is directly defaulted as enabled.

Besides, in one fax process, successful preprocessing only needs to be performed once on the fax signal. Therefore, before step S101, whether the fax parameter negotiation signal has already been acquired and configured according to the preprocessing configuration policy in a current fax process may also be judged; and if yes, no repetitive configuration needs to be performed. Of course, in one fax process, when the preprocessing of the fax signal needs to be dynamically adjusted, i.e., the configuration needs to be dynamically adjusted, preprocessing may also be performed for many times.

### Embodiment 2

Referring to FIG. 2, this embodiment provides a gateway device, including an acquisition module 1, a configuration processing module 2 and a sending module 3.

The acquisition module 1 is configured to: acquire a fax parameter negotiation signal.

The configuration processing module 2 is configured to: configure the fax parameter negotiation signal according to a preset preprocessing configuration policy, herein the preprocessing configuration policy contains a configuration policy for fax control parameters, and the fax control parameter includes a parameter that affects a fax success rate; the control parameters include but are not limited to at least one of a fax speed parameter, an error control mode parameter and an ability parameter; the ability parameter includes but is not limited to T.6 coding ability parameter, V.8 ability parameter, etc..

In this embodiment, the configuration policy may be set as: disabling a parameter (such as setting it to 0) which facilitates improvement of fax success rate if the parameter is disabled; and enabling a parameter (such as setting it to 1) which facilitates improvement of fax success rate if the parameter is enabled.

The sending module 3 is configured to: send the configured fax parameter negotiation signal to a corresponding fax machine.

The gateway device further includes a configuration module 4, configured to: preset the preprocessing configuration policy for preprocessing the fax signal in the gateway device.

For the sake of better description, in this embodiment, the solution of this embodiment of the present invention will be exemplarily described below by taking a VBD fax mode as an example. However, it shall be understood that this embodiment of the present invention is not limited to the VBD fax mode only. For other fax modes, the solution of preprocessing the fax signal to improve the fax success rate provided by this embodiment of the present invention may also be used in a negotiation process.

When the VBD fax solution is used, the acquisition module 1 acquires the fax parameter negotiation signal when entering a VBD fax process.

The acquisition module 1 acquires the fax parameter negotiation signal by using the following mode:
When the gateway device where the acquisition module 1 is located is a receiver gateway device, i.e., a connected fax machine thereof is a receiving end, the acquisition module 1 acquires the fax parameter negotiation signal from a local-end fax machine, an acquisition process includes:
   acquiring a local-end fax signal from the local-end fax machine, herein the fax signal is generally a local-end fax signal on which sampling, quantization and voice coding have been performed;
   performing voice decoding to the local-end fax signal; and
   judging whether the decoded local-end fax signal is a fax parameter negotiation signal; if the decoded local-end fax signal is a fax parameter negotiation signal, the configuration processing module 2 performs configuration; and otherwise, the fax signal is sent to the opposite-fax machine directly.

When the gateway device where the acquisition module 1 is located is a sender gateway device, the acquisition module 1 acquires the fax parameter negotiation signal from an opposite-end fax machine, an acquisition process includes:
receiving an opposite-end fax signal sent by the opposite-end fax machine, herein voice coding has been performed on the fax signal to facilitate transmission;
performing voice decoding to the opposite-end fax signal; and
judging whether the opposite-end fax signal is a fax parameter negotiation signal; if the opposite-end fax signal is a fax parameter negotiation signal, the configuration module 2 performs configuration; and otherwise, the fax signal is sent to the local-end fax machine directly.

The sending module 3 sends the configured fax parameter negotiation signal to the corresponding fax machine by using the following mode:
when the gateway device is the receiver gateway device, performing voice coding on the configured fax parameter negotiation signal and then sending the configured fax parameter negotiation signal to the opposite-end fax machine; and
when the gateway device is the sender gateway device, performing voice coding on the configured fax parameter negotiation signal and then sending the configured fax parameter negotiation signal to the local-end fax machine.

In this embodiment, the gateway device further includes a judgment module 5 configured to: before the acquisition module 1 acquires the fax parameter negotiation signal, judge whether a fax signal preprocessing function is enabled; and/or judge whether the fax parameter negotiation signal has already been acquired and configured according to the preprocessing configuration policy in a current fax process.

When the configuration module 4 presets the preprocessing configuration policy for preprocessing the fax signal, a user may perform corresponding configuration in a database table through a corresponding human-machine interface. During configuration, whether the fax signal preprocessing function is enabled may also be selectively configured, and the preprocessing process is executed only when the fax signal preprocessing function is enabled; otherwise, the process is not executed. Of course, the configuration for this enabled item may also be not performed and it is directly defaulted as enabled.

Besides, in one fax process, successful preprocessing only needs to be performed once on the fax signal. Therefore, the judgment module 5 may also judge whether the fax parameter negotiation signal has already been acquired and configured according to the preprocessing configuration policy in a current fax process; and if yes, no repetitive configuration needs to be performed. Of course, in one fax process, when the preprocessing of the fax signal needs to be dynamically adjusted, i.e., the configuration needs to be dynamically adjusted, preprocessing may also be performed for many times.

### Embodiment 3

The embodiment of the present invention will be exemplarily described below in combination with a specific application scenario.

FIG. 3 illustrates a structural schematic diagram of a system provided by this embodiment. As illustrated in FIG. 3, this embodiment describes a module architecture diagram for fax between a local-end fax machine and a remote-end fax machine. The system includes a local-end gateway device, a signaling server, an intermediate device, a local-end fax machine and a remote-end fax machine. Functions of the two fax machines are not repetitively described.

The local-end gateway device is a comprehensive system product by using a gateway as a core, and includes but is not limited to various uplink home gateways and uplink devices thereof, relay gateways and connected user interface devices thereof, access gateways, etc. The core gateway can be directly or indirectly connected with a fax machine and can be directly or indirectly connected with an Ethernet in the uplink. Implementation codes of this method run on this type of gateways.

The call signaling server is a device for processing call signaling, and includes but is not limited to Session Initiation Protocol (sip) servers, soft switches, etc.

The intermediate device indicates a device to which the remote-end fax machine is connected, is possibly a system similar to a gateway as well and is also possibly an interface system of a virtual fax machine or a network fax machine. A fax signal is a T.30 signal and a fax parameter negotiation signal is Digital Identification Signal (DIS).

Before a VBD fax process is established, content of a database table is configured through a human-machine interface, it is determined that a T.30 signal preprocessing function is enabled and meanwhile a preprocessing policy is configured. After the VBD fax process is entered, a database configuration table is read and the preprocessing function is enabled. In consideration of that an initiator of fax machine protocol negotiation is a receiver, two situations need to be considered in this embodiment. If the local-end connected fax machine of the gateway device is a receiver, modulation and demodulation modules are enabled. Firstly decoding processing is performed on data in a fax channel, then an output result is input into the demodulation module, a result output by the demodulation module is modified according to the configuration content of a data table. The output thereof sequentially passes through the modulation module and a coding module and then is sent as usual to a remote end, and at this moment the fax signal of the remote end is not processed and is transparently transmitted to the local fax machine. If the local-end fax machine connected with the gateway device is a sender, data sent by the local fax machine are not processed. However, the modulation and demodulation modules need to be enabled when data of the remote-end fax machine are sent to the local gateway device. Firstly decoding processing is performed on the data, then an output result is input into the demodulation module, a result output by the demodulation module is modified according to configuration content of the data table. The output sequentially passes through the modulation module and the coding module and then is sent to the local fax machine. After it is determined that fax negotiation succeeds and data transmission is started, the modulation and demodulation modules are disabled.

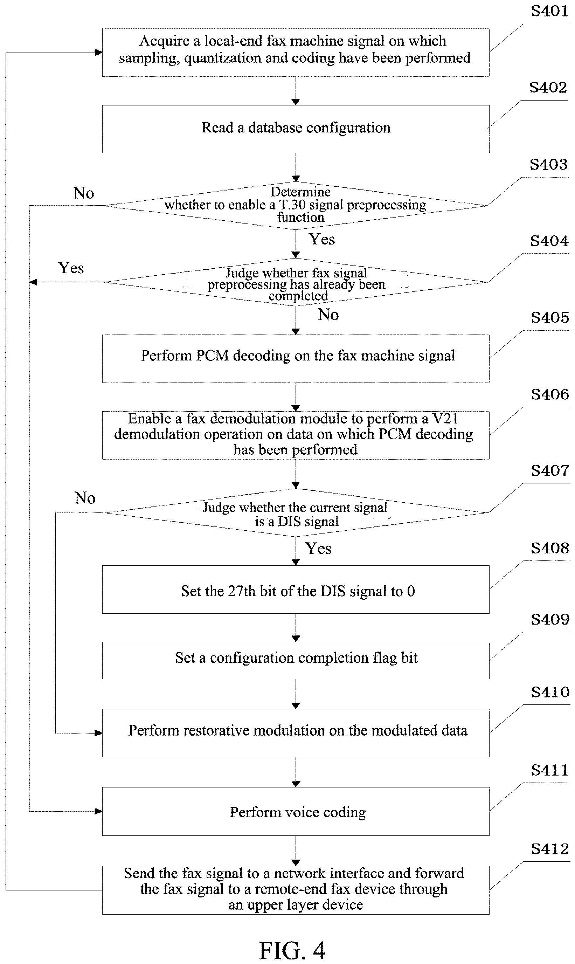

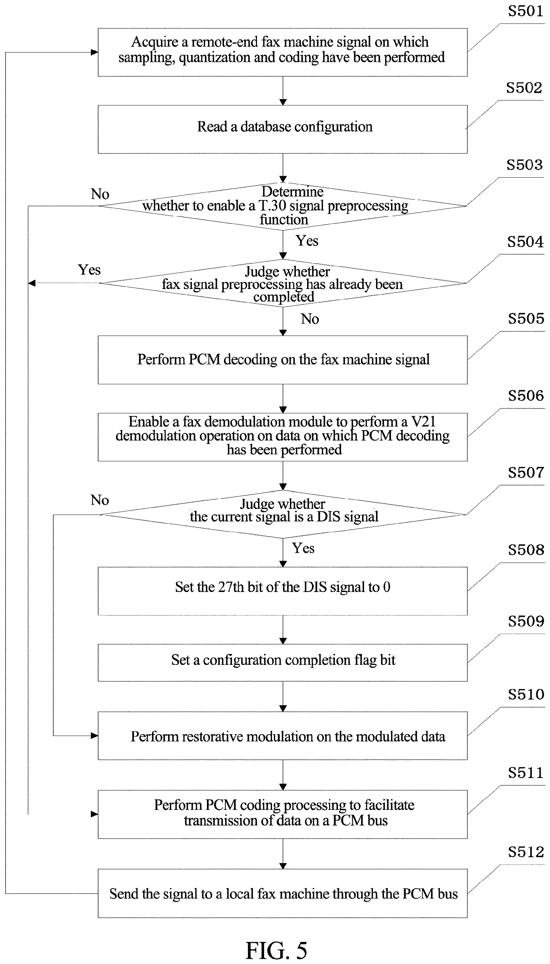

A specific implementation process is on the premise that a system illustrated in FIG. 3 is used as hardware architecture and two fax machines have already started to enter a VBD fax process. Function implementation is completed in the local-end gateway system. The implementation process is divided into two procedures according to fax packet receiving and sending (i.e., as receiver and sender). Description is made with reference to FIG. 4 and FIG. 5. Environmental conditions in this specific embodiment are set as follows: a VBD fax preprocessing T.30 signal function is enabled on a PC through a human-machine interface, and it is configured that an ECM function is disabled. ECM refers to a fax machine automatic error correction mode. When a network environment is normal, after ECM function is enabled, a situation that page information is repetitively faxed will be caused, resulting in timeout which causes fax failure. When the ECM function is disabled, a situation that page information is slightly damaged will be possibly caused, but reading is not affected and the fax success rate is greatly improved. The ECM function is a function, which can be flexibly configured, of a fax machine.

Referring to FIG. 4, when a local end of fax is a receiver, a process for preprocessing a T.30 signal includes the following steps S401-S412.

In step S401, a local-end fax machine signal on which sampling, quantization and coding have been performed is acquired.

In step S402, a database configuration is read.

In step S403, whether to enable a T.30 signal preprocessing function is determined according to content of a database table, if yes, configuration content is stored and step S404 is executed; and if not, step S411 is executed.

In step S404, whether fax signal preprocessing configuration has already been completed once is judged, if yes, step S411 is executed; and if not, step S405 is executed.

In step S405, PCM decoding is performed on the fax machine signal, the acquired fax signal generally has already been coded to facilitate transmission thereof on a Pulse Code Modulation (PCM) bus, and thus PCM decoding needs to be performed for the purpose of subsequent processing.

In step S406, a fax demodulation module is enabled to perform a V21 demodulation operation on data on which PCM decoding has been performed, for the purpose of judging whether the current processed fax signal is a DIS signal.

In step S407, since the DIS signal in the T.30 fax signal is an initiation signal of fax parameter negotiation and carries a negotiation parameter, whether the current signal is a DIS signal is judged according to an output result of the demodulation module, if yes, step S408 is executed; and if not, step S410 is executed.

In step S408, since the DIS signal has configurable items of 127 bits, herein the 27th bit indicates whether ECM is enabled, 1 represents that EMC is enabled and 0 represents EMC is disabled, therefore the bit is set to 0.

In step S409, since data configuration only needs to be performed once at a negotiation stage in one fax process, a configuration completion flag bit needs to be set to facilitate judgment in step S404.

In step S410, since judgment and modification can be performed only after fax data are demodulated and a modulation state should be restored after this operation, a fax modulation module is enabled to perform restorative modulation on the demodulated data.

In step S411, since a voice signal needs to be coded and sent when the voice signal is processed by a VoIP system and VBD fax refers to transparently transmitting data in a voice channel, voice coding needs to be performed and then the signal is sent.

In step S412, after the operation is completed, the fax signal is sent to a network interface and is forwarded to a remote-end fax device through an upper layer device, herein since cyclic processing is needed before one fax is ended, the process returns to step S401.

Referring to FIG. 5, when a local end of fax is a sender, a process for preprocessing a T.30 signal includes the following steps:
In step S501, a remote-end fax machine signal on which voice coding has been performed is acquired.

In step S502, a database configuration is read.

In step S503, whether to enable a T.30 signal preprocessing function is determined according to content of a database table, if yes, configuration content is stored and step S504 is executed; and if not, step S511 is executed.

In step S504, whether fax signal preprocessing function has already been completed once is judged, if yes, step S511 is executed; and if not, step S505 is executed.

In step S505, PCM decoding is performed on the remote-end signal.

In step S506, a fax demodulation module is enabled to perform a V21 demodulation operation on data on which PCM decoding has been performed, for the purpose of judging whether the current processed fax signal is a DIS signal.

In step S507, since the DIS signal in the T.30 fax signal is an initiation signal of fax parameter negotiation and carries a negotiation parameter, whether the current signal is a DIS signal is judged according to an output result of the demodulation module, if yes, step S508 is executed; and if not, step S510 is executed.

In step S508, since the DIS signal has configurable items of 127 bits, herein the 27th bit indicates whether ECM is enabled, 1 represents that EMC is enabled and 0 represents EMC is disabled, therefore the bit is set to 0.

In step S509, since data configuration only needs to be performed once at a negotiation stage in one fax process, a configuration completion flag bit needs to be set to facilitate judgment in step S504.

In step S510, since judgment and modification can be performed only after fax data are demodulated and a modulation state should be restored after this operation, a fax modulation module is enabled to perform restorative modulation on the demodulated data.

In step S511, PCM coding processing is performed to facilitate transmission of data on a PCM bus.

In step S512, after the operation is completed, the signal is sent to a local fax machine through the PCM bus, herein since cyclic processing is needed before one fax is ended, the process returns to step S501.

In the method of improving the fax success rate by preprocessing the T.30 signal, the traditional fax controlis improved, the compatibility of the gateway device to the fax machine is greatly improved, the fax success rate is improved and the high-quality fax service experience of the user is guaranteed. It shall be understood that multiple configuration possibilities exist when the T.30 signal is preprocessed but are allincluded in this method, the above-mentioned embodiments are just used for enabling the technical means adopted by the present application to achieve the predetermined purposes and the effects thereof to be more deeply and specifically understood, instead of limiting the present application. Any method for completing fax parameter configuration in the VBD fax process without modifying a parameter of the fax machine itself is included in the scope of the present patent.

Besides, an embodiment of the present invention further provides a computer-readable storage medium, storing computer-executable instructions, which, when executed, implement the above mentioned fax control method.

One skilled in the art can understand that all or partial steps in the above-mentioned methods may be completed by relevant hardware (such as a processor) instructed by a program, and the program may be stored in a computer-readable storage medium such as a read-only memory, a magnetic disc or a compact disc. Optionally, all or partial steps in the above-mentioned embodiments may also be implemented by using one or more integrated circuits. Correspondingly, each module/unit in the above-mentioned embodiments may be implemented by means of hardware, e.g., a corresponding function thereof is implemented through an integrated circuit, and it may also be implemented by means of a software function module, e.g., a corresponding function thereof is implemented through a processor executing programs/instructions stored in a memory. The present application is not limited to combinations of hardware and software in any specific form.

The above-mentioned content is further detailed description about the present application in combination with specific implementation modes and it shall not be considered as that the specific implementation of the present application is only limited to the description. One skilled in the art may also make various simple deductions and replacements without departing from the concept of the present application, which, however, are all considered as included in the protection scope of the present application.

### Industrial Applicability

The embodiments of the present invention provide a fax control method and a gateway device. The gateway device can modify the fax control parameter according to the preprocessing configuration policy and can flexibly configure the fax negotiation parameter, the compatibility of the gateway device with the fax machine can be improved while the fax success rate is improved, the fax control parameter can be modified directly via the gateway device when the problem of fax failure occurs while the gateway device is commercially used or is subjected to a network access permission test, the operation is not limited to modification of adjustment parameters of the fax machine only, and the user experience can be improved to a greater extent.

## Claims

1. A fax control method, comprising:
acquiring, by a gateway device, a fax parameter negotiation signal;
configuring, by the gateway device, the fax parameter negotiation signal according to a preset preprocessing configuration policy, wherein the preprocessing configuration policy contains a configuration policy of a fax control parameter and the fax control parameter affects a fax success rate; and
sending, by the gateway device, the configured fax parameter negotiation signal to a corresponding fax machine.

2. The fax control method according to claim 1, wherein,
the fax is voice band data fax; and
acquiring, by a gateway device, a fax parameter negotiation signal comprises: acquiring, by the gateway device, the fax parameter negotiation signal after entering a voice band data fax process.

3. The fax control method according to claim 2, wherein acquiring, by the gateway device, the fax parameter negotiation signal comprises:
when the gateway device is a receiver gateway device, acquiring the fax parameter negotiation signal from a local-end fax machine; and
when the gateway device is a sender gateway device, acquiring the fax parameter negotiation signal from an opposite-end fax machine.

4. The fax control method according to claim 3, wherein,
acquiring, by the gateway device, the fax parameter negotiation signal from a local-end fax machine comprises:
acquiring a local-end fax signal from the local-end fax machine;
performing voice decoding on the local-end fax signal; and
judging whether the local-end fax signal is a fax parameter negotiation signal; and
acquiring, by the gateway device, the fax parameter negotiation signal from an opposite-end fax machine comprises:
receiving an opposite-end fax signal sent by the opposite-end fax machine;
performing voice decoding on the opposite-end fax signal; and
judging whether the opposite-end fax signal is a fax parameter negotiation signal.

5. The fax control method according to claim 4, wherein sending, by the gateway device, the configured fax parameter negotiation signal to a corresponding fax machine comprises:
when the gateway device is a receiver gateway device, performing voice coding on the configured fax parameter negotiation signal and then sending the configured fax parameter negotiation signal to the opposite-end fax machine; and
when the gateway device is a sender gateway device, performing voice coding on the configured fax parameter negotiation signal and then sending the configured fax parameter negotiation signal to the local-end fax machine.

6. The fax control method according to any one of claims 1-5, wherein, before acquiring, by the gateway device, the fax parameter negotiation signal, the method further comprises: judging whether a fax signal preprocessing function is enabled; and/or judging whether the fax parameter negotiation signal has already been acquired and configured according to the preprocessing configuration policy in a current fax process.

7. The fax control method according to any one of claims 1-5, wherein the fax control parameter comprises at least one of a fax speed parameter, an error control mode parameter and an ability parameter.

8. The fax control method according to claim 7, wherein the configuration policy is: disabling a parameter which facilitates improvement of fax success rate after the parameter is disabled; and enabling a parameter which facilitates improvement of fax success rate after the parameter is enabled.

9. A gateway device, comprising:
an acquisition module, configured to acquire a fax parameter negotiation signal;
a configuration processing module, configured to configure the fax parameter negotiation signal according to a preset preprocessing configuration policy, wherein the preprocessing configuration policy contains a configuration policy of a fax control parameter and the fax control parameter affects a fax success rate; and
a sending module, configured to send the configured fax parameter negotiation signal to a corresponding fax machine.

10. The gateway device according to claim 9, wherein,
the fax is voice band data fax; and
the acquisition module acquires the fax parameter negotiation signal through the following mode: acquiring the fax parameter negotiation signal after entering a voice band data fax process.

11. The gateway device according to claim 9 or 10, wherein the gateway device further comprises a judgment module configured to, before the acquisition module acquires the fax parameter negotiation signal, judge whether a fax signal preprocessing function is enabled; and/or judge whether the fax parameter negotiation signal has already been acquired and configured according to the preprocessing configuration policy in a current fax process.

12. The gateway device according to claim 9 or 10, wherein the fax control parameter comprises at least one of a fax speed parameter, an error control mode parameter and an ability parameter.

13. The gateway device according to claim 12, wherein the configuration policy is: disabling a parameter which facilitates improvement of fax success rate after the parameter is disabled; and enabling a parameter which facilitates improvement of fax success rate after the parameter is enabled.
